(19) Europäisches Patentamt
European Patent Office
Office européen des brevets

(11) **EP 3 384 594 B1**

(12) **FASCICULE DE BREVET EUROPEEN**

(45) Date de publication et mention
de la délivrance du brevet:
**11.09.2019 Bulletin 2019/37**

(21) Numéro de dépôt: **16806041.6**

(22) Date de dépôt: **01.12.2016**

(51) Int Cl.:
***H02S 50/15*** *(2014.01)*

(86) Numéro de dépôt international:
**PCT/EP2016/079468**

(87) Numéro de publication internationale:
**WO 2017/093422 (08.06.2017 Gazette 2017/23)**

(54) **PROCÉDÉ ET DISPOSITIF D'ÉVALUATION DE L'ÉNERGIE PRODUITE PAR UN ARC ÉLECTRIQUE DANS UNE INSTALLATION PHOTOVOLTAÏQUE**

VERFAHREN UND VORRICHTUNG ZUR BEWERTUNG DER VON EINEM ELEKTRISCHEN BOGEN ERZEUGTEN ENERGIE IN EINER FOTOVOLTAIKVORRICHTUNG

METHOD AND DEVICE FOR EVALUATING THE ENERGY PRODUCED BY AN ELECTRIC ARC IN PHOTOVOLTAIC APPARATUS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **01.12.2015 FR 1561628**

(43) Date de publication de la demande:
**10.10.2018 Bulletin 2018/41**

(73) Titulaires:
• **Commissariat à l'Énergie Atomique et aux Énergies Alternatives**
**75015 Paris (FR)**
• **Socomec**
**67230 Benfeld (FR)**

(72) Inventeurs:
• **CHAINTREUIL, Nicolas**
**73800 Montmelian (FR)**
• **SIAT, Stéphane**
**67230 Obenheim (FR)**

(74) Mandataire: **Novaimo**
**ActiTech 8**
**60 avenue Marie Curie**
**Archamps Technopole**
**74166 Saint Julien-en-Genevois Cedex (FR)**

(56) Documents cités:
• SCHIMPF F ET AL: "Recognition of electric arcing in the DC-wiring of photovoltaic systems", INTELEC 09 : 31ST INTERNATIONAL TELECOMMUNICATIONS ENERGY CONFERENCE ; INCHEON, KOREA, 18 - 22 OCTOBER 2009, IEEE, PISCATAWAY, NJ, USA, 18 octobre 2009 (2009-10-18), pages 1-6, XP031579534, ISBN: 978-1-4244-2490-0
• KOSTYANTYN KOZIY ET AL: "A Low-Cost Power-Quality Meter With Series Arc-Fault Detection Capability for Smart Grid", IEEE TRANSACTIONS ON POWER DELIVERY, IEEE SERVICE CENTER, NEW YORK, NY, US, vol. 28, no. 3, 1 juillet 2013 (2013-07-01), pages 1584-1591, XP011515987, ISSN: 0885-8977, DOI: 10.1109/TPWRD.2013.2251753

## Description

## Domaine technique de l'invention

L'invention concerne un procédé et un dispositif d'évaluation de l'énergie produite par un arc électrique dans une installation photovoltaïque. Elle concerne aussi une installation photovoltaïque équipée d'un tel dispositif.

## État de la technique

Les installations photovoltaïques sont susceptibles d'être le siège d'arcs électriques. Les documents F. Schimpf et L. Norman, 31st International Telecommunication Energy conference, Incheon, Korea, 18-22 Oct 2009, IEEE, Piscataway, NJ, USA, 1-6, XP031579534; et K. Kozyi et al., IEEE Transactions on power delivery, IEEE service center, New York, US, vol. 28, n.3, 1584-1591, XP011515987 décrivent des procédés d'évaluation de l'énergie produite par un arc électrique.

Un arc électrique peut se produire en cas de défaut de conducteur ou en cas de connexion défectueuse (par exemple suite à l'ouverture d'un connecteur en charge ou du fait de la corrosion d'un conducteur). Il est réalisé par un plasma qui apparaît entre deux électrodes. Celles-ci peuvent être constituées par les deux extrémités d'un conducteur ou par deux parties d'un connecteur ouvert ou localement interrompu (du fait d'une corrosion par exemple). L'apparition d'un arc électrique s'accompagne d'un front ou saut positif de tension de courte durée, de l'ordre de quelques microsecondes. La tension d'arc initiale $V_{arc0}$ a une valeur qui est caractéristique de l'apparition d'un arc électrique et qui dépend du matériau des électrodes. Elle est généralement comprise entre 10V et 30V. Par exemple, dans le cas d'électrodes en cuivre, la tension d'arc initiale $V_{arc0}$ est de l'ordre de 20V. Le plasma de l'arc électrique joue le rôle d'une résistance qui augmente au cours du temps. Le front de tension initial est donc généralement suivi d'une augmentation progressive de la tension d'arc pouvant aller jusqu'à atteindre une tension en circuit ouvert.

Les installations photovoltaïques ont la caractéristique de fonctionner à courant et tension électriques continues, ce qui peut s'avérer problématique en cas d'apparition d'un arc électrique lié à un défaut. En effet, en courant et tension continus, il n'y a pas d'extinction naturelle de l'arc électrique par passage par zéro de la tension et du courant, comme c'est le cas en courant alternatif. Il en résulte qu'un arc électrique lié à un défaut est susceptible de générer un plasma dégageant une très forte chaleur pendant une durée importante et produisant donc beaucoup d'énergie au sein d'une installation photovoltaïque. Un tel plasma est destructeur et peut provoquer un début d'incendie. Pour des raisons de sécurité, il est donc indispensable de détecter la présence d'un éventuel arc électrique au sein d'une installation photovoltaïque et de l'interrompre en temps utile afin d'éviter toute dégradation ou début d'incendie. A cet effet, l'installation photovoltaïque est équipée d'un dispositif de détection d'arc, ou détecteur d'arc. Celui-ci est généralement associé à un dispositif d'intervention ou d'extinction d'arc, destiné à intervenir pour interrompre l'arc électrique et empêcher toute dégradation ou départ d'incendie.

Un arc électrique peut également se produire, en fonctionnement normal, dans un organe électromagnétique de commande et/ou de protection, à l'ouverture ou à la fermeture de contacts ou pôles. Par exemple, un interrupteur sectionneur génère, à l'ouverture, un arc électrique d'une durée inférieure ou égale à une durée maximale connue. Des moyens d'extinction d'arc permettent généralement d'interrompre l'arc de manière à ce qu'il ne perdure pas au-delà d'une durée d'arc maximale prédéfinie.

Il existe diverses méthodes, dont certaines très rapides, permettant de détecter la présence d'un arc électrique dans une installation photovoltaïque. En cas d'arc électrique lié à l'ouverture en charge d'un interrupteur sectionneur ou autre organe électromécanique, cela risque de provoquer une détection positive d'arc suivie d'un arrêt intempestif de l'installation photovoltaïque, ce qui n'est pas souhaitable.

Par ailleurs, un arc électrique lié à un défaut dans l'installation photovoltaïque peut avoir une durée pouvant aller de quelques microsecondes à plusieurs minutes, voire plusieurs heures dans certaines conditions particulières. Par exemple, dans le cas d'un arc électrique discontinu composé d'une succession de micro-arcs de courtes durées, séparés par des périodes sans arc, chaque micro-arc n'est a priori pas dangereux en lui-même mais l'énergie cumulée par la succession de ces micro-arcs peut devenir critique pour l'environnement et/ou l'installation au fil du temps.

Pour les raisons qui viennent d'être évoquées, il apparaît utile d'évaluer le niveau d'énergie dégagé par un arc électrique, dans le but notamment d'apprécier sa dangerosité pour l'installation photovoltaïque et/ou l'environnement.

## Objet de l'invention

A cet effet, l'invention concerne un procédé d'évaluation de l'énergie électrique produite par un arc électrique dans une installation photovoltaïque comprenant les étapes suivantes :

A) Mesure d'un signal de courant électrique produit par l'installation avec une fréquence d'échantillonnage supérieure ou égale à 50 kHz, et, à partir du signal de courant mesuré :

◦ Détermination d'une valeur initiale du courant avant apparition d'un arc électrique ;
◦ Détermination de valeurs de courant pendant l'arc électrique ;

B) Evaluation de valeurs d'une tension d'arc à partir des valeurs de courant déterminées pendant l'arc et de la valeur initiale du courant;

C) Intégration dans le temps du produit des valeurs de tension d'arc évaluées par les valeurs de courant déterminées, afin de déterminer l'énergie de l'arc.

Selon l'invention, l'énergie électrique générée par un arc électrique se produisant au sein de l'installation photovoltaïque est évaluée à partir d'une simple mesure du courant produit par l'installation, à une fréquence d'échantillonnage élevée. Le dispositif de mesure peut donc comprendre un simple capteur de mesure de courant.

Dans un mode de réalisation particulier, pour évaluer chaque valeur de tension d'arc, on calcule la différence entre une valeur de courant pendant l'arc déterminée et la valeur initiale de courant et on multiplie ladite différence par le rapport entre une amplitude de saut de tension lié à l'apparition de l'arc électrique et une amplitude de saut de courant lié à l'apparition de l'arc électrique.

Selon l'invention, la tension d'arc est évaluée à partir du courant mesuré. Cette évaluation est basée sur une reconstruction linéaire à partir du courant mesuré. Chaque valeur de tension d'arc évaluée est proportionnelle à l'écart entre une valeur de courant pendant l'arc et le courant initial, par un facteur de proportionnalité qui est égal au rapport entre l'amplitude du saut de tension et l'amplitude du saut de courant, liées à l'apparition de l'arc.

Avantageusement, le procédé comprend une étape de décomposition du signal de courant en une pluralité de fenêtres d'acquisition, et, pour chaque fenêtre d'acquisition, une étape de détermination d'une valeur moyenne du courant, ladite valeur moyenne étant enregistrée en mémoire.

Dans un mode de réalisation particulier, lors de l'étape d'intégration, on calcule, pour chaque fenêtre d'acquisition, une énergie d'arc en faisant le produit de la valeur moyenne du courant mesuré sur ladite fenêtre, de la valeur de tension évaluée et d'une durée de la fenêtre d'acquisition, puis on fait la somme des énergies d'arc calculées relatives à une succession de fenêtres d'acquisition

Dans une variante de réalisation, dans le cas d'un arc électrique discontinu comportant une pluralité de micro-arcs, on met en oeuvre les étapes B) et C) pour déterminer l'énergie de chaque micro-arc électrique, puis on fait la somme des énergies respectives des micro-arcs électriques afin de déterminer l'énergie de l'arc électrique discontinu.

Dans un mode de réalisation particulier, la valeur initiale du courant est égale à la valeur moyenne du courant relative à au moins une fenêtre d'acquisition précédant celle qui contient le saut de courant.

La valeur du saut de tension peut être prédéfinie et comprise entre 12V et 35V, par exemple égale à 20V.

Avantageusement, l'amplitude du saut de courant est déterminée à partir du signal de courant mesuré.

Dans un mode de réalisation particulier, le procédé comprend une étape de comparaison de l'énergie de l'arc électrique déterminée avec un seuil d'énergie et une étape de mise en sécurité en cas de dépassement dudit seuil.

L'invention concerne aussi un dispositif d'évaluation de l'énergie dégagée par un arc électrique dans une installation photovoltaïque caractérisé en ce qu'il comprend :

- un module d'obtention d'un signal de courant électrique produit par l'installation ;
- un module de traitement du signal de courant, adapté pour déterminer une valeur initiale du courant avant apparition d'un arc électrique et des valeurs de courant pendant l'arc électrique ;
- un module d'évaluation de valeurs de tension d'arc à partir des valeurs de courant déterminées et de la valeur initiale du courant ;
- un module d'intégration dans le temps du produit des valeurs de tension d'arc évaluées par les valeurs de courant déterminées, afin de déterminer l'énergie de l'arc.

Le dispositif comprend avantageusement tout ou partie des caractéristiques additionnelles suivantes :

- le module d'évaluation de valeurs de tension d'arc est adapté pour calculer la différence entre une valeur de courant pendant l'arc déterminée et la valeur initiale de courant et multiplier ladite différence par le rapport entre une amplitude de saut de tension lié à l'apparition de l'arc électrique et une amplitude de saut de courant lié à l'apparition de l'arc électrique ;
- le module de traitement du signal de courant est adapté pour décomposer le signal de courant en une pluralité de fenêtres d'acquisition, et, pour chaque fenêtre d'acquisition, déterminer une valeur moyenne de courant mesuré sur ladite fenêtre, ladite valeur moyenne de courant étant enregistrée en mémoire ;
- le module d'intégration est agencé pour calculer, pour chaque fenêtre d'acquisition, une énergie d'arc en faisant le produit de la valeur moyenne du courant mesuré sur ladite fenêtre, de la valeur de tension évaluée et d'une durée de la fenêtre d'acquisition, puis pour faire la somme des énergies d'arc calculées relatives à une succession de fenêtres d'acquisition.

L'invention concerne aussi un système de sécurité pour une installation photovoltaïque, caractérisé en ce qu'il comprend un dispositif de détection d'un arc électrique, un dispositif d'évaluation de l'énergie dégagée par l'arc électrique détecté, tel que défini ci-dessus, et un dispositif d'intervention destiné à mettre l'installation photovoltaïque en sécurité en cas d'arc électrique.

L'invention concerne également une installation photovoltaïque comprenant le système de sécurité défini ci-dessus.

## Description sommaire des dessins

L'invention sera mieux comprise à l'aide de la description suivante d'un mode de réalisation particulier du procédé et du dispositif d'évaluation de l'énergie produite ou générée par un arc électrique dans une installation photovoltaïque, d'un système de sécurité pour installation photovoltaïque intégrant un tel dispositif d'évaluation et d'une installation photovoltaïque équipée de ce système de sécurité, en référence aux dessins annexés sur lesquels :

- La figure 1 représente un schéma d'une installation photovoltaïque selon un exemple de réalisation de l'invention ;
- La figure 2 représente un exemple de signal mesuré de courant électrique produit par l'installation de la figure 1, intégrant un saut de courant lié à un arc électrique ;
- La figure 3 représente un premier exemple d'un signal de courant électrique produit par l'installation photovoltaïque de la figure 1, décomposé en fenêtres d'acquisition et intégrant un saut de courant lié à l'apparition d'un arc électrique continu au sein de l'installation ;
- La figure 4 représente un deuxième exemple d'un signal de courant électrique produit par l'installation photovoltaïque de la figure 1, décomposé en fenêtres d'acquisition et intégrant plusieurs sauts de courant liés à des micro-arcs électriques au sein de l'installation ;
- La figure 5 représente un exemple de la caractéristique courant-tension d'un module photovoltaïque de l'installation de la figure 1 et la courbe correspondante de puissance en fonction de la tension ;
- La figure 6 représente un organigramme des étapes du procédé d'évaluation, selon un mode de réalisation particulier de l'invention ;

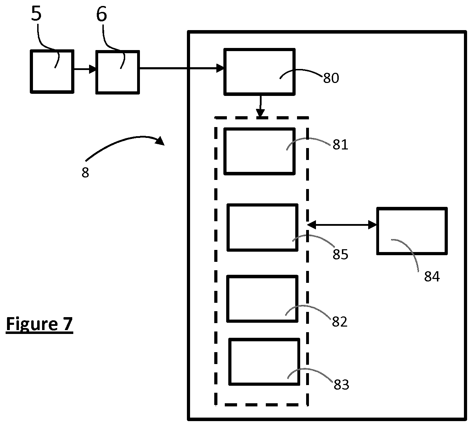

- La figure 7 représente un schéma bloc fonctionnel du dispositif d'évaluation selon une forme de réalisation particulière de l'invention, adapté pour mettre en oeuvre le procédé de la figure 5.

## Description détaillée de modes de réalisation particuliers de l'invention

L'invention vise à évaluer l'énergie générée ou produite par un arc électrique se produisant au sein d'une installation photovoltaïque 100.

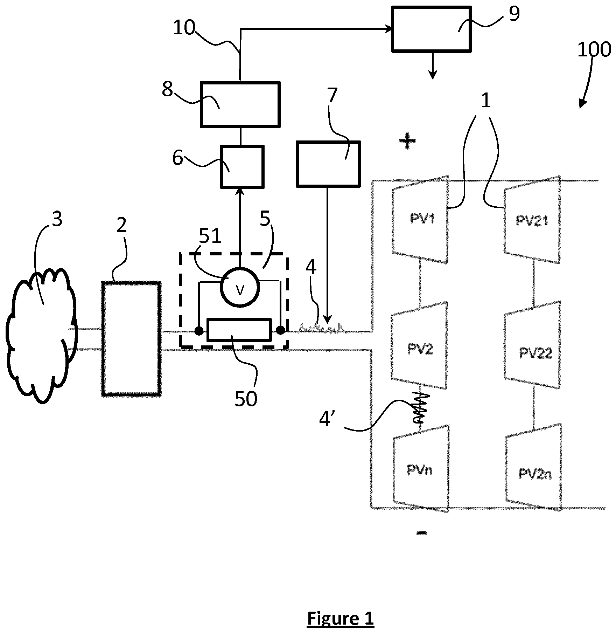

Sur la figure 1, on a représenté schématiquement un exemple d'installation photovoltaïque 100 apte à produire un courant continu I. Celle-ci comprend, de façon connue, plusieurs modules photovoltaïques (PV) 1 reliés à un onduleur 2. Les modules PV 1 sont ici identiques. Les modules PV1 peuvent être montés en série, en parallèle ou en combinant les deux. Une chaîne de modules PV montés en série est appelée « string ». Par exemple, comme représenté sur la figure 1, l'installation 100 comprend plusieurs strings, ou chaînes, de m modules PV 1, connectées en parallèle. L'onduleur 2 est destiné à convertir le courant continu I produit par les modules photovoltaïques 1 en un courant alternatif et à fournir celui-ci à un réseau électrique 3.

Le procédé de l'invention cherche à évaluer l'énergie dégagée ou produite par un arc électrique dont la présence est détectée au sein d'une installation photovoltaïque 100. Un arc électrique peut être lié à un défaut et se produire en tout endroit de l'installation 100, par exemple entre les modules photovoltaïques 1 et l'onduleur 2 (comme représenté par l'arc électrique 4 sur la figure 1), ou au sein d'un module photovoltaïque 1, ou encore sur une liaison reliant en série plusieurs modules photovoltaïques 1 (comme représenté par l'arc électrique 4' sur la figure 1). Un arc électrique peut également se produire en fonctionnement normal de l'installation 100, au sein d'un organe électromécanique, par exemple au sein d'un interrupteur sectionneur (non représenté sur la figure 1), à l'ouverture en charge des contacts de celui-ci. Dans ce cas, l'organe est doté de moyens d'extinction d'arc permettant d'éteindre rapidement l'arc électrique.

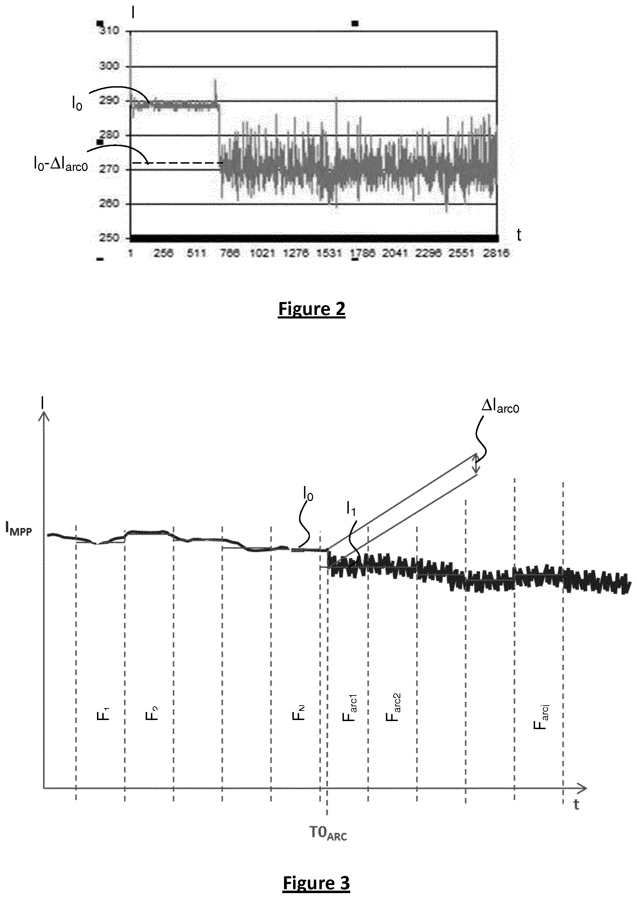

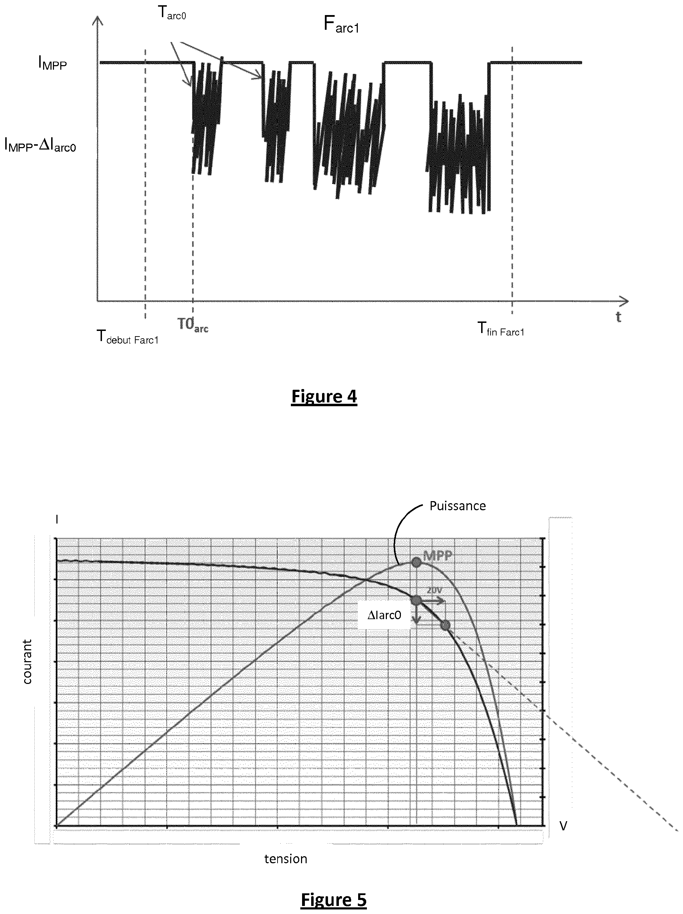

Un arc électrique, qu'il soit lié à un défaut ou non, provoque une variation importante de tension au sein de l'installation électrique 100. En effet, l'apparition de l'arc électrique se caractérise par un front ou saut positif de tension, d'une durée de l'ordre de quelques microsecondes et d'une amplitude égale à une tension d'arc initiale $V_{arc0}$ caractéristique. La valeur de cette tension d'arc initiale $V_{arc0}$ est typiquement comprise entre 12V et 35V. Elle dépend du matériau constituant les électrodes entre lesquelles l'arc électrique se forme. Par exemple, si les électrodes sont en cuivre, la tension d'arc initiale $V_{arc0}$ est égale, ou sensiblement égale, à 20V. Lorsqu'un arc électrique apparaît dans l'installation photovoltaïque 100, qu'il s'agisse d'un arc électrique lié à un défaut (par exemple l'arc 4 ou 4') ou d'un arc électrique lié à l'ouverture en charge de l'interrupteur sectionneur, la tension aux bornes d'un ou plusieurs modules photovoltaïques 1 (dans l'hypothèse où l'arc se produit à l'extérieur du ou des modules considérés) augmente brutalement du fait de la tension d'arc initiale $V_{arc0}$ et le courant I produit par l'installation photovoltaïque diminue également brutalement d'une valeur $\Delta I_{arc0}$. Cette valeur $\Delta I_{arc0}$ dépend de la position du point de fonctionnement sur la courbe courant-tension, ou courbe caractéristique I-V, du ou des modules photovoltaïques. Sur la figure 5, on a représenté un saut de tension de 20V à parti du point MPP de puissance maximale d'un ou plusieurs modules PV et le saut de courant $\Delta I_{arc0}$ correspondant, provoqués par l'apparition d'un arc électrique. Sur la figure 2, on a représenté à titre d'exemple illustratif un saut de courant négatif lié à l'apparition d'un arc électrique, en l'espèce un arc électrique continu de longue durée provoqué par un défaut au sein de l'installation photovoltaïque 100.

Sur la figure 3, on a représenté un premier exemple d'un signal de courant électrique I, produit par l'installation photovoltaïque 100 et mesuré par un capteur de mesure de courant. Ce signal intègre un saut de courant négatif lié à l'apparition d'un arc électrique continu de longue durée provoqué par un défaut. Le signal de courant est décomposé en une succession de fenêtres d'acquisition, chaque fenêtre d'acquisition ayant une durée comprise entre 10µs et 100ms, notées :

- $F_i$, avec $1 \leq i \leq N$, avant apparition de l'arc, et
- $F_{arcj}$, avec $1 \leq j$, à compter de l'apparition de l'arc.

Sur la figure 4, on a représenté un deuxième exemple d'un signal de courant électrique I, produit par l'installation photovoltaïque 100 et mesuré par un capteur de mesure de courant. Le signal intègre un saut de courant négatif lié à l'apparition d'un arc électrique discontinu comportant une succession de micro-arcs (c'est-à-dire d'arcs électriques de courte durée, typiquement comprise entre 2 µs et 100 µs) séparés par des périodes sans arc. Le signal de courant est décomposé en une succession de fenêtres d'acquisition. Sur la figure 4, seule la fenêtre d'acquisition contenant le début de l'arc électrique est représentée. Un arc électrique de ce type est généralement lié à un défaut de connexion (oxydation de contact, rupture de soudure, desserrage de bornier, etc.). En présence d'un tel défaut de connexion, des électrodes se forment mais restent par construction très proches l'une de l'autre, voire même en contact aléatoire, ce qui induit des connexions électriques aléatoires. Un arc électrique peut apparaître entre ces électrodes, durer quelques microsecondes à quelques centaines de microsecondes. Par fusion des matériaux d'électrode, un pont de soudure peut se créer, rétablissant ainsi le contact électrique entre les électrodes, puis se rompre à nouveau sous l'effet joule du courant provoquant ainsi l'apparition d'un nouvel arc de courte durée. Cette alternance d'apparition et de disparition d'arc de courte durée peut se répéter à plusieurs reprises et générer ainsi une succession d'arcs électriques de courtes durées séparés par des périodes sans arc.

L'installation photovoltaïque 100 comprend en outre un capteur 5 de mesure du courant électrique I produit par l'installation 100, un dispositif 7 de détection d'arc électrique, un dispositif 8 d'évaluation de l'énergie dégagée par un arc électrique détecté et un dispositif 9 d'intervention ou de mise en sécurité.

Le capteur de mesure de courant 5 comprend par exemple une résistance 50, telle qu'une résistance shunt, placée sur une liaison électrique de l'installation photovoltaïque 100 (par exemple en entrée de l'onduleur 2 comme représenté sur la figure 1), et un capteur de mesure de tension 51 destiné à mesurer la tension aux bornes de la résistance 50 qui est l'image directe du courant I par un facteur de proportionnalité connu. Le courant I fourni par l'installation photovoltaïque 100 est en effet proportionnel à la tension U aux bornes de la résistance 50, selon la relation : $I = 1/R * U$ (R représentant la valeur de la résistance 50). La tension U mesurée ici est donc l'image du courant continu I délivré par l'installation photovoltaïque 100. On pourrait toutefois utiliser un capteur de mesure de courant d'un autre type. Le capteur 5 de mesure de courant fonctionne à une fréquence d'échantillonnage élevée, ici supérieure ou égale à 50 kHz. Dans l'exemple décrit ici, la fréquence d'échantillonnage est égale à 200 kHz.

Le capteur de mesure 5 est relié à une mémoire tampon 6 destiné notamment à stocker le signal de courant mesuré.

Le dispositif 7 de détection d'arc électrique a pour fonction de détecter un arc électrique se produisant dans l'installation photovoltaïque 100. Il est adapté pour mettre en oeuvre une méthode de détection d'arc électrique, de préférence capable de détecter rapidement l'apparition d'un arc électrique, de préférence dans un délai maximal de quelques centaines de microsecondes après cette apparition. La méthode de détection peut reposer sur la détection d'un saut positif de tension, comme décrit par exemple dans le document brevet FR3002645, ou sur une mesure de courant, notamment sur la détection d'un saut négatif de courant lié à l'apparition de l'arc comme décrit dans la demande de brevet français déposée sous le numéro 1561622. Le dispositif de détection 7 est relié à un ou plusieurs capteurs de mesure de tension ou de courant, selon la méthode de détection d'arc mise en oeuvre, par des liaisons de communication. L'installation étant équipée d'un capteur 5 de mesure de courant haute fréquence, la détection d'arc électrique pourrait de façon avantageuse être basée sur la mesure du courant.

Le dispositif 8 d'évaluation de l'énergie dégagée par un arc électrique détecté a pour fonction d'évaluer la quantité d'énergie produite ou dégagée par un arc électrique détecté par le dispositif de détection 8. Il comprend les modules suivants :

- un module 80 d'obtention d'un signal de courant électrique produit par l'installation ;
- un module 81 de traitement du signal de courant obtenu ;
- un module 82 d'évaluation de la tension d'arc ;
- un module 83 de détermination de l'énergie de l'arc ;
- une unité de traitement ou de contrôle 84, en l'espèce un microprocesseur, à laquelle sont reliés tous les modules 80 à 83 et destinée à en contrôler le fonctionnement ;
- une mémoire 85.

Le module 80 d'obtention du signal de courant est relié à la mémoire tampon 6 qui stocke le signal de courant mesuré par le capteur de mesure 5.

Le module de traitement 81 est adapté pour décomposer le signal de courant mesuré en une pluralité de fenêtres d'acquisition notées $F_x$. Chaque fenêtre con-

tient un nombre $N_f$ de points d'acquisition (c'est-à-dire de valeurs de tension mesurées/échantillonnées). Pour chaque fenêtre d'acquisition $F_x$, le module 81 calcule une valeur moyenne de la tension mesurée sur la fenêtre, notée $V_{F_x}$. Les valeurs moyennes de tension relatives aux différentes fenêtres d'acquisition $F_x$ sont enregistrées en mémoire 85. Ainsi, les valeurs de tension déterminées pendant un arc, notées $V_{Farcj}$, correspondent aux valeurs moyennes de tension calculées relatives aux fenêtres d'acquisition $F_{arcj}$ pendant l'arc électrique. Par ailleurs, le module de traitement 81 est destiné à déterminer une valeur initiale du courant avant apparition d'un arc électrique, l'amplitude d'un saut de courant lié à l'apparition d'un arc électrique et des valeurs de courant après apparition de l'arc électrique, à partir du signal de courant mesuré, comme cela sera décrit dans la description du procédé.

Le module 82 est destiné à évaluer des valeurs de tension d'arc à partir des valeurs de courant déterminées pendant l'arc et de la valeur initiale du courant, comme cela sera également décrit plus en détail dans la description du procédé.

Le module 83 est destiné à déterminer l'énergie d'un arc électrique par intégration dans le temps de valeurs de tension d'arc évaluées et de valeurs de courant déterminées pendant l'arc, comme cela sera décrit plus en détail dans la description du procédé.

Les modules 81, 82 et 83 sont des modules logiciels destinés à être exécutés par l'unité de traitement 84 pour la mise en oeuvre d'étapes du procédé d'évaluation qui sera décrit plus loin. L'unité de traitement 84 est également destinée à transmettre une commande de mise en sécurité au dispositif d'intervention 9, en cas de détection d'un arc électrique, notamment d'un arc électrique ayant dégagé une énergie critique. Le dispositif d'intervention 9 a pour rôle d'interrompre un tel arc électrique, afin d'éviter tout risque de détérioration ou d'incendie. Le dispositif d'évaluation d'énergie 8 est relié au dispositif d'intervention 9 par une liaison de communication 10.

Le dispositif 7 de détection d'arc électrique, le dispositif 8 d'évaluation de l'énergie électrique produite par l'arc électrique détecté et le dispositif d'intervention 9 forment un système de sécurité pour installation photovoltaïque 100.

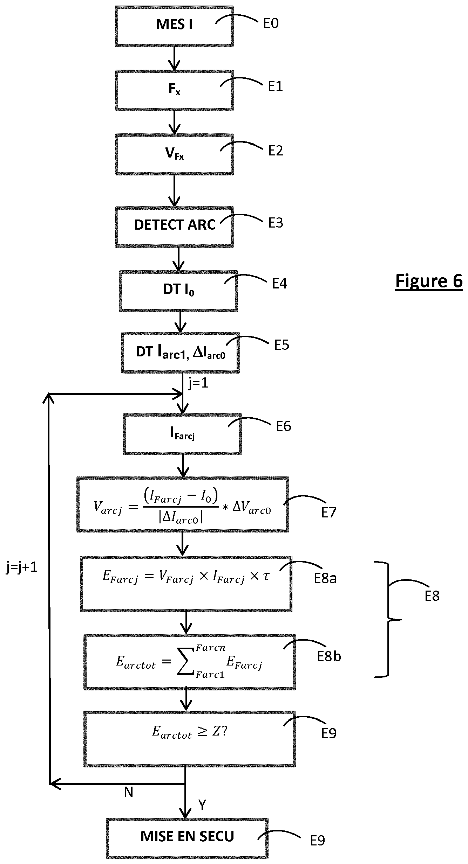

On va maintenant décrire un mode de réalisation particulier du procédé d'évaluation de l'énergie électrique produite par un arc électrique détecté dans l'installation photovoltaïque 100, en référence à la figure 6.

Le procédé comprend une étape E0 d'acquisition ou de mesure, ici par le capteur de mesure 5, d'un signal de courant électrique I produit par l'installation 100. Le signal de courant mesuré I est ici enregistré en mémoire 6 et peut être obtenu par le module 80 du dispositif d'évaluation d'énergie 8. Le signal mesuré est échantillonné avec une fréquence d'échantillonnage $F_{ech}$ élevée, supérieure ou égale à 50 kHz, par exemple égale à 200 kHz.

Le signal de courant mesuré I est décomposé en une succession de fenêtres d'acquisition $F_x$ lors d'une étape E1. Celle-ci est mise en oeuvre par le module 81 de traitement du signal. Chaque fenêtre d'acquisition $F_x$ contient un nombre fixe prédéfini $N_f$ de valeurs de courant échantillonnées (ou points d'acquisition). Les fenêtres d'acquisition ont donc une durée fixe, ici égale à $\frac{N_f}{F_{ech}}$. Pour chaque fenêtre d'acquisition $F_x$, le module de traitement 81 calcule une valeur moyenne de la tension mesurée sur la fenêtre, notée $V_{F_x}$, en faisant la moyenne des points d'acquisition de la fenêtre, lors d'une étape E2. Ces valeurs moyennes de tension $V_{F_x}$ sont stockées en mémoire 85.

Le procédé comprend une étape E3 de détection d'un arc électrique, mise en oeuvre par le dispositif de détection d'arc 7. Cette étape de détection E3 vise à détecter un arc électrique se produisant dans l'installation photovoltaïque 100. Comme précédemment indiqué, la détection peut être basée sur toute méthode connue de détection d'arc électrique, de préférence adaptée pour détecter rapidement l'arc dans un délai maximal de quelques centaines de microsecondes après son apparition.

On note :

- $F_i$, avec $1 \leq i \leq N$, les fenêtres antérieures à l'apparition de l'arc,
- $F_{arc1}$, la fenêtre contenant un saut de courant lié à l'apparition de l'arc, et
- $F_{arcj}$ avec $1 < j$, les fenêtres postérieures à l'apparition de l'arc.

Supposons qu'un arc électrique, par exemple un arc électrique tel que celui représenté sur la figure 3, est détecté lors de l'étape E3. Notons $T0_{arc}$ l'instant d'apparition de l'arc électrique. A cet instant $T0_{arc}$, un saut négatif de courant se produit dans le signal de courant, comme cela apparaît sur la figure 3.

Lors d'une étape E4, le dispositif d'évaluation d'énergie 8 détermine une valeur initiale, ou nominale, $I_0$ du courant I avant apparition de l'arc électrique. Dans le mode de réalisation particulier décrit ici, il calcule la valeur moyenne du courant relative à la fenêtre d'acquisition $F_N$ précédant la fenêtre $F_{arc1}$ qui contient le saut de courant lié à l'apparition de l'arc à l'instant $T0_{arc}$. La valeur initiale $I_0$ du courant avant apparition d'un arc électrique est donc égale à la valeur moyenne du courant durant la fenêtre $F_N$ précédant l'apparition de l'arc. En variante, on pourrait calculer la moyenne du courant sur plusieurs fenêtres d'acquisition antérieures à l'apparition de l'arc afin de déterminer le courant initial $I_0$.

Lors d'une étape suivante E5, le dispositif d'évaluation d'énergie 8 détermine l'amplitude $\Delta I_{arc0}$ du saut de courant lié à l'apparition de l'arc électrique. A cet effet, il calcule par exemple la valeur moyenne du courant

$I_{arc1}$ après le saut de courant durant la fenêtre d'acquisition $F_{arc1}$ puis la différence entre cette valeur de courant $I_{arc1}$ et la valeur initiale du courant $I_0$. L'étape E4 est mise en oeuvre par le module 81 de traitement du signal de courant.

Le procédé se poursuit par une étape E6 lors de laquelle le dispositif d'évaluation d'énergie 8 détermine des valeurs de courant $I_{Farcj}$ pendant l'arc électrique, correspondant aux valeurs moyennes du courant mesuré sur les fenêtres d'acquisition $F_{arcj}$ postérieures à l'apparition de l'arc électrique (avec j>1). L'étape E6 est mise en oeuvre par le module de traitement 81. Les valeurs de courant déterminées $I_{Farcj}$ sont enregistrées en mémoire 85.

Le procédé comprend ensuite une étape E7 d'évaluation de valeurs de la tension d'arc, notées $V_{arcj}$, relatives aux fenêtre d'acquisition $F_{arcj}$ durant la présence de l'arc électrique. Dans le mode de réalisation décrit ici, les valeurs de la tension d'arc sont évaluées à partir des valeurs de courant $I_{Farcj}$ déterminées à déterminées pendant l'arc et de la valeur initiale du courant $I_0$. Pour évaluer chaque valeur de tension d'arc $V_{arcj}$, on calcule la différence entre une valeur de courant pendant l'arc déterminée $I_{Farcj}$ et la valeur initiale de courant $I_0$ et on multiplie cette différence par le rapport entre une amplitude de saut de tension $\Delta V_{arc0}$ et une amplitude correspondante (en valeur absolue) de saut de courant $\Delta i_{arc0}$, liées à l'apparition de l'arc électrique. Autrement dit, on estime la tension d'arc $V_{arcj}$ par la relation suivante :

$$V_{arcj} = \frac{(I_{Farcj} - I_0)}{|\Delta I_{arc0}|} * \Delta V_{arc0}$$

La valeur du saut de tension $\Delta V_{arc0}$ est prédéfinie, comme précédemment explicité. Elle est ici comprise entre 12V et 35V. Dans l'exemple de réalisation décrit ici, elle est fixée à 20V.

L'étape E7 est mise en oeuvre par le module 82 d'évaluation de la tension d'arc.

Ensuite, lors d'une étape E8, le dispositif d'évaluation d'énergie 8 calcule l'énergie de l'arc électrique détecté, par intégration dans le temps du produit des valeurs de tension d'arc évaluées $V_{Farcj}$ par les valeurs de courant déterminées $I_{Farcj}$. L'intégration dans le temps peut être réalisée par la mise en oeuvre des sous-étapes suivantes :

   a) Calcul de l'énergie d'arc pour chaque fenêtre d'acquisition pendant l'arc électrique, puis
   b) Calcul de la somme des énergies d'arc ainsi calculés pour une succession de fenêtres d'acquisition couvrant l'arc électrique.

Ainsi, lors d'une sous-étape E8a), on calcule l'énergie d'arc $E_{Farcj}$ pour chaque fenêtre $F_{arcj}$ (c'est-à-dire l'énergie générée par l'arc durant une fenêtre $F_{arcj}$) selon la relation suivante :

$$E_{Farcj} = V_{Farcj} \times I_{Farcj} \times \tau, \text{ où } \tau = \frac{N_f}{F_{ech}}$$

Puis, lors d'une sous-étape E8b), on calcule l'énergie d'arc électrique totale générée par l'arc durant un nombre n de fenêtres $F_{arcj}$ successives, n étant le nombre total de fenêtres $F_{arcj}$ à l'instant considéré, par la relation suivante :

$$E_{arctot} = \sum_{Farc1}^{Farcn} E_{Farcj}$$

L'étape E8 est mise en oeuvre par le module 83 de détermination de l'énergie d'arc pendant toute la durée de l'arc et, le cas échéant, réitérée à chaque nouvelle fenêtre d'acquisition afin d'actualiser la valeur déterminée de l'énergie d'arc.

L'étape E8 d'évaluation de l'énergie $E_{arctot}$ générée ou produite par l'arc électrique peut être suivie d'une étape de test E9 permettant de vérifier si l'énergie d'arc totale est supérieure ou égale à un seuil d'énergie critique Z (par exemple exprimé en Joules). Autrement dit, lors de l'étape E8, on réalise le test suivant :

$$E_{arctot} \geq Z?$$

Par exemple, le seuil Z est égal à 2 Joules. On pourrait toutefois adapter la valeur de ce seuil, en fonction de l'installation et de son environnement.

Si le test E9 est positif, l'énergie d'arc totale ayant atteint ou dépassé le seuil Z, le dispositif d'évaluation d'énergie 8 envoie automatiquement au dispositif d'intervention 9 une commande de mise en sécurité de l'installation 100. Puis, lors d'une étape E9, le dispositif d'intervention 9 met en sécurité l'installation photovoltaïque 100. Cette mise en sécurité peut reposer sur des interrupteurs commandés à distance. Elle peut consister en un ordre d'interruption du fonctionnement de l'installation photovoltaïque, ce qui permet de stopper l'arc électrique parasite et de supprimer tout risque de dégradation et/ou de début d'incendie.

Si le test E9 est négatif, l'énergie d'arc totale étant inférieure au seuil Z, les étapes E6 à E9 sont réitérées pour la fenêtre d'acquisition suivante (j=j+1).

En variante, on pourrait définir différents niveaux de criticité de l'arc électrique, par exemple :

- « niveau 1 » correspondant à une énergie totale d'arc $E_{arctot}(t)$ strictement inférieure à 1 Joules ;
- « niveau 2 » correspondant à une énergie totale d'arc $E_{arctot}(t)$ supérieure ou égale à 1 Joules et strictement inférieure à 2 Joules ;
- « niveau 3 » correspondant à une énergie totale d'arc $E_{arctot}(t)$ supérieure strictement à 2 Joules.

Le niveau 1 correspond à un arc électrique sans risque de sécurité. Le dispositif d'évaluation 8 peut éventuellement signaler la présence d'un arc électrique sans risque de sécurité à un opérateur. Celui-ci peut décider de ne pas activer d'alerte pour ce niveau.

Le niveau 2 correspond à un arc électrique sans risque de sécurité immédiat mais qui pourrait éventuellement devenir dangereux. Dans ce cas, le dispositif d'évaluation 8 signale à l'opérateur la présence d'un arc électrique sans risque de sécurité immédiat mais nécessitant une intervention rapide pour identifier le défaut à l'origine de l'arc et le corriger.

Le niveau 3 correspond à un arc électrique dangereux. Le dispositif d'évaluation 8 commande une mise en sécurité immédiate de l'installation photovoltaïque 100 au dispositif d'intervention 9, comme précédemment décrit.

Dans le mode de réalisation qui vient d'être décrit, l'arc électrique détecté (tel que représenté sur la figure 3) est un arc continu de longue durée. Dans un autre mode de réalisation, l'arc électrique détecté est discontinu. Il comprend une succession de micro-arcs séparés par des périodes sans arc. Sur la figure 4, on a représenté un exemple d'arc électrique discontinu durant une fenêtre d'acquisition, en l'espèce la fenêtre contenant les premiers micro-arcs. Dans ce cas, le dispositif d'évaluation d'énergie 8 identifie les micro-arcs et, pour chaque micro-arc, détermine la valeur moyenne du courant durant ce micro-arc puis évalue la valeur de tension correspondante comme précédemment explicité. Puis il évalue l'énergie de chaque micro-arc. Le dispositif 8 stocke en mémoire les énergies évaluées relatives aux micro-arcs identifiés puis somme ces énergies afin d'obtenir l'énergie totale générée par l'arc électrique. Le test E9 est ensuite mis en oeuvre afin le cas échéant de commander une mise en sécurité de l'installation photovoltaïque 100.

## Revendications

1. Procédé d'évaluation de l'énergie électrique produite par un arc électrique dans une installation photovoltaïque (100) comprenant les étapes suivantes :

   D) Mesure (E0) d'un signal de courant électrique produit par l'installation (100) avec une fréquence d'échantillonnage supérieure ou égale à 50 kHz, et, à partir du signal de courant mesuré :

   ◦ Détermination (E3) d'une valeur initiale ($I_0$) du courant avant apparition d'un arc électrique ;
   ◦ Détermination (E5) de valeurs de courant ($I_{arcj}$) pendant l'arc électrique ;

   E) Evaluation (E6) de valeurs d'une tension d'arc à partir des valeurs de courant déterminées pendant l'arc et de la valeur initiale du courant;
   F) Intégration (E7) dans le temps du produit des valeurs de tension d'arc évaluées par les valeurs de courant déterminées, afin de déterminer l'énergie de l'arc.

2. Procédé selon la revendication 1, **caractérisé en ce que**, pour évaluer chaque valeur de tension d'arc, on calcule la différence entre une valeur de courant pendant l'arc déterminée et la valeur initiale de courant et on multiplie ladite différence par le rapport entre une amplitude de saut de tension ($\Delta V_{arc0}$) lié à l'apparition de l'arc électrique et une amplitude de saut de courant ($\Delta I_{arc0}$) lié à l'apparition de l'arc électrique.

3. Procédé selon l'une des revendications précédentes, **caractérisé en ce qu'**il comprend une étape (E1) de décomposition du signal de courant en une pluralité de fenêtres d'acquisition ($F_x$, $F_i$, $F_{arcj}$), et, pour chaque fenêtre d'acquisition, une étape (E5) de détermination d'une valeur moyenne du courant, ladite valeur moyenne étant enregistrée en mémoire.

4. Procédé selon la revendication précédente, **caractérisé en ce que**, lors de l'étape d'intégration (E7), on calcule (E7a), pour chaque fenêtre d'acquisition, une énergie d'arc en faisant le produit de la valeur moyenne du courant mesuré sur ladite fenêtre, de la valeur de tension évaluée et d'une durée de la fenêtre d'acquisition, puis on fait la somme (E7b) des énergies d'arc calculées relatives à une succession de fenêtres d'acquisition.

5. Procédé selon l'une des revendications précédentes, **caractérisé en ce que**, dans le cas d'un arc électrique discontinu comportant une pluralité de micro-arcs, on met en oeuvre les étapes B) et C) pour déterminer l'énergie de chaque micro-arc électrique, puis on fait la somme des énergies respectives des micro-arcs électriques afin de déterminer l'énergie de l'arc électrique discontinu.

6. Procédé selon l'une des revendications précédentes, **caractérisé en ce que** la valeur initiale du courant ($I_0$) est égale à la valeur moyenne du courant relative à au moins une fenêtre d'acquisition ($F_N$) précédant celle qui contient le saut de courant.

7. Procédé selon l'une des revendications précédentes, **caractérisé en ce que** l'amplitude du saut de tension est prédéfinie et comprise entre 12V et 35V, notamment égale à 20V.

8. Procédé selon l'une des revendications précédentes, **caractérisé en ce que** l'amplitude du saut de courant est déterminée à partir du signal de courant mesuré.

9. Procédé selon l'une des revendications précédentes, **caractérisé en ce qu'**il comprend une étape (E8) de comparaison de l'énergie de l'arc électrique déterminée avec un seuil d'énergie et une étape (E9) de mise en sécurité en cas de dépassement dudit seuil.

10. Dispositif d'évaluation de l'énergie dégagée par un arc électrique dans une installation photovoltaïque (100) **caractérisé en ce qu'**il comprend :

   • un module (80) d'obtention d'un signal de courant électrique produit par l'installation ;
   • un module (81) de traitement du signal de courant, adapté pour déterminer une valeur initiale du courant avant apparition d'un arc électrique et des valeurs de courant pendant l'arc électrique ;
   • un module (82) d'évaluation de valeurs de tension d'arc à partir des valeurs de courant déterminées et de la valeur initiale du courant ;
   • un module (83) d'intégration dans le temps du produit des valeurs de tension d'arc évaluées par les valeurs de courant déterminées, afin de déterminer l'énergie de l'arc.

11. Dispositif selon la revendication précédente, **caractérisé en ce que** le module (82) d'évaluation de valeurs de tension d'arc est adapté pour calculer la différence entre une valeur de courant pendant l'arc déterminée et la valeur initiale de courant et multiplier ladite différence par le rapport entre une amplitude de saut de tension ($\Delta V_{arc0}$) lié à l'apparition de l'arc électrique et une amplitude de saut de courant ($\Delta I_{arc0}$) lié à l'apparition de l'arc électrique.

12. Dispositif selon l'une des revendications 10 et 11, **caractérisé en ce que** le module (81) de traitement du signal de courant est adapté pour décomposer le signal de courant en une pluralité de fenêtres d'acquisition, et, pour chaque fenêtre d'acquisition, déterminer une valeur moyenne de courant mesuré sur ladite fenêtre, ladite valeur moyenne de courant étant enregistrée en mémoire.

13. Dispositif selon la revendication précédente, **caractérisé en ce que** le module d'intégration (83) est agencé pour calculer, pour chaque fenêtre d'acquisition, une énergie d'arc en faisant le produit de la valeur moyenne du courant mesuré sur ladite fenêtre, de la valeur de tension évaluée et d'une durée de la fenêtre d'acquisition, puis pour faire la somme (E7b) des énergies d'arc calculées relatives à une succession de fenêtres d'acquisition.

14. Système de sécurité pour une installation photovoltaïque, **caractérisé en ce qu'**il comprend un dispositif (7) de détection d'un arc électrique, un dispositif (8) d'évaluation de l'énergie dégagée par l'arc électrique détecté, selon l'une des revendications 10 à 13, et un dispositif d'intervention (9) destiné à mettre l'installation photovoltaïque en sécurité en cas d'arc électrique.

15. Installation photovoltaïque, **caractérisée en ce qu'**elle comprend un système de sécurité selon la revendication précédente.

**Patentansprüche**

1. Verfahren zur Beurteilung des Stroms, der von einem Lichtbogen in einer Fotovoltaikanlage (100) erzeugt wird, das die folgenden Schritte umfasst:

   D) Messung (E0) eines Stromsignals, das von der Anlage (100) erzeugt wird, mit einer Abtastfrequenz größer oder gleich 50 kHz und ausgehend von dem gemessenen Stromsignal:

      ° Bestimmung (E3) eines Anfangswerts ($I_0$) des Stroms vor dem Auftreten eines Lichtbogens;
      ° Bestimmung (E5) von Stromwerten ($I_{arcj}$) während des Lichtbogens;

   E) Beurteilung (E6) von Werten einer Bogenspannung ausgehend von den Stromwerten, die während des Bogens bestimmt werden, und dem Anfangswert des Stroms;
   F) zeitliche Integration (E7) des Produkts der Bogenspannungswerte, die von den bestimmten Stromwerten beurteilt werden, um die Energie des Bogens zu bestimmen.

2. Verfahren nach Anspruch 1, **dadurch gekennzeichnet, dass** zum Beurteilen jedes Bogenspannungswerts der Unterschied zwischen einem bestimmten Stromwert während des Bogens und dem Anfangsstromwert berechnet wird, und dass der Unterschied durch das Verhältnis zwischen einer Spannungssprungamplitude ($\Delta V_{arc0}$), die mit dem Erscheinen des Lichtbogens zusammenhängt, und einer Stromsprungamplitude ($\Delta I_{arc0}$), die mit dem Erscheinen des Lichtbogens zusammenhängt, multipliziert wird.

3. Verfahren nach einem der vorhergehenden Ansprüche, **dadurch gekennzeichnet, dass** es einen Schritt (E1) des Aufschlüsselns des Stromsignals in eine Vielzahl von Erfassungsfenstern ($F_x$, $F_i$, $F_{arcj}$) umfasst, und für jedes Erfassungsfenster einen Schritt (E5) zum Bestimmen eines Durchschnittswerts des Stroms, wobei der Durchschnittswert im Speicher aufgezeichnet wird.

4. Verfahren nach dem vorhergehenden Anspruch, **dadurch gekennzeichnet, dass** bei dem Integrationsschritt (E7) für jedes Erfassungsfenster eine Bogenenergie berechnet wird (E7a), indem das Produkt des Durchschnittswerts des Stroms, der auf dem Fenster gemessen wird, des beurteilten Spannungswerts und einer Dauer des Erfassungsfensters ermittelt wird, dann die Summe (E7b) der berechneten Bogenenergien bezüglich einer Abfolge von Erfassungsfenstern ermittelt wird.

5. Verfahren nach einem der vorhergehenden Ansprüche, **dadurch gekennzeichnet, dass** in dem Fall eines diskontinuierlichen Lichtbogens, der eine Vielzahl von Mikrobögen umfasst, die Schritte B) und C) umgesetzt werden, um die Energie jedes Strommikrobogens zu bestimmen, dann die Summe der jeweiligen Energien der Strommikrobögen ermittelt wird, um die Energie des diskontinuierlichen Lichtbogens zu bestimmen.

6. Verfahren nach einem der vorhergehenden Ansprüche, **dadurch gekennzeichnet, dass** der Anfangswert des Stroms ($I_0$) gleich dem Durchschnittswert des Stroms bezüglich mindestens eines Erfassungsfensters ($F_N$), das dem vorausgeht, das den Stromsprung enthält, ist.

7. Verfahren nach einem der vorhergehenden Ansprüche, **dadurch gekennzeichnet, dass** die Amplitude des Spannungssprungs vordefiniert ist und zwischen 12 V und 35 V liegt, insbesondere gleich 20 V ist.

8. Verfahren nach einem der vorhergehenden Ansprüche, **dadurch gekennzeichnet, dass** die Amplitude des Stromsprungs ausgehend von dem gemessenen Stromsignal bestimmt wird.

9. Verfahren nach einem der vorstehenden Ansprüche, **dadurch gekennzeichnet, dass** es einen Schritt (E8) zum Vergleichen der Energie des bestimmten Lichtbogens mit einer Schwellenenergie und einen Schritt (E9) zum Sichern im Fall eines Überschreitens des Schwellenwerts umfasst.

10. Beurteilungsvorrichtung der Energie, die von einem Lichtbogen in einer Fotovoltaikanlage (100) abgegeben wird, **dadurch gekennzeichnet, dass** sie Folgendes umfasst:

 • ein Modul (80) zum Erhalten eines Stromsignals, das von der Anlage erzeugt wird;
 • ein Modul (81) zum Verarbeiten des Stromsignals, das angepasst ist, um einen Anfangswert des Stroms vor dem Erscheinen eines Lichtbogens und Stromwerte während des Lichtbogens zu bestimmen;
 • ein Modul (82) zur Beurteilung von Bogenspannungswerten ausgehend von den bestimmten Stromwerten und dem Anfangswert des Stroms;
 • ein Modul (83) zur zeitlichen Integration des Produkts der beurteilten Bogenspannungswerte durch die bestimmten Stromwerte, um die Energie des Bogens zu bestimmen.

11. Vorrichtung nach dem vorstehenden Anspruch, **dadurch gekennzeichnet, dass** das Modul (82) zur Beurteilung von Bogenspannungswerten angepasst ist, um den Unterschied zwischen einem Stromwert, der während des Bogens bestimmt wird, und dem Anfangsstromwert zu berechnen, und den Unterschied mit dem Verhältnis zwischen einer Spannungssprungamplitude ($\Delta V_{arc0}$), die mit dem Erscheinen des Lichtbogens zusammenhängt, und einer Stromsprungamplitude ($\Delta I_{arc0}$), die mit dem Erscheinen des Lichtbogens zusammenhängt, zu multiplizieren.

12. Vorrichtung nach einem der Ansprüche 10 und 11, **dadurch gekennzeichnet, dass** das Modul (81) zur Verarbeitung des Stromsignals angepasst ist, um das Stromsignal in eine Vielzahl von Erfassungsfenstern aufzuschlüsseln und für jedes Erfassungsfenster einen Stromdurchschnittswert zu bestimmen, der auf dem Fenster gemessen wird, wobei der Stromdurchschnittswert im Speicher aufgezeichnet wird.

13. Vorrichtung nach dem vorstehenden Anspruch, **dadurch gekennzeichnet, dass** das Integrationsmodul (83) eingerichtet ist, um für jedes Erfassungsfenster eine Bogenenergie zu berechnen, indem das Produkt des Durchschnittswerts des Stroms, der auf dem Fenster gemessen wird, des beurteilten Spannungswerts und einer Dauer des Erfassungsfensters ermittelt wird, um dann die Summe (E7b) der Bogenenergien, die bezüglich einer Abfolge von Erfassungsfenstern berechnet werden, zu ermitteln.

14. Sicherheitssystem für eine Fotovoltaikanlage, **dadurch gekennzeichnet, dass** sie eine Vorrichtung (7) zur Erfassung eines Lichtbogens, eine Vorrichtung (8) zur Beurteilung der Energie, die von dem erfassten Lichtbogen abgegeben wird, nach einem der Ansprüche 10 bis 13 sowie eine Eingriffsvorrichtung (9) umfasst, die dazu bestimmt ist, die Fotovoltaikanlage im Fall eines Lichtbogens zu sichern.

15. Fotovoltaikanlage, **dadurch gekennzeichnet, dass** sie ein Sicherheitssystem nach dem vorhergehenden Anspruch umfasst.

**Claims**

1. A method for evaluating the electrical energy produced by an electric arc in a photovoltaic installation (100), comprising the following steps:

D) Measuring (E0) an electric current signal produced by the installation (100) at a sampling frequency greater than or equal to 50 kHz and, from the measured current signal:

   ◦ Determining (E3) an initial value (Io) of the current before an electric arc appears;
   ◦ Determining (E5) current values ($I_{arcj}$) during the electric arc;

E) Evaluating (E6) values of an arc voltage from the current values determined during the arc and from the initial value of the current;
F) Integrating (E7), over time, the product of the evaluated arc voltage values and the determined current values, in order to determine the energy of the arc.

2. The method as claimed in claim 1, **characterized in that**, to evaluate each arc voltage value, the difference between a determined current value during the arc and the initial current value is calculated, and said difference is multiplied by the ratio between a magnitude of a voltage jump ($\Delta V_{arc0}$) linked to the appearance of the electric arc and a magnitude of a current jump ($\Delta I_{arc0}$) linked to the appearance of the electric arc.

3. The method as claimed in either of the preceding claims, **characterized in that** it comprises a step (E1) of breaking down the current signal into a plurality of acquisition windows ($F_x$, $F_i$, $F_{arcj}$), and, for each acquisition window, a step (E5) of determining an average value of the current, said average value being recorded in memory.

4. The method as claimed in the preceding claim, **characterized in that**, in the integration step (E7), an arc energy for each acquisition window is calculated (E7a) by taking the product of the average value of the current measured over said window, of the evaluated voltage value and of a duration of the acquisition window, and then summing (E7b) the calculated arc energies in relation to a succession of acquisition windows.

5. The method as claimed in one of the preceding claims, **characterized in that**, in the event of a discontinuous electric arc including a plurality of micro-arcs, steps B) and C) are implemented in order to determine the energy of each electric micro-arc, and then the respective energies of the electric micro-arcs are summed in order to determine the energy of the discontinuous electric arc.

6. The method as claimed in one of the preceding claims, **characterized in that** the initial value of the current (Io) is equal to the average value of the current in relation to at least one acquisition window ($F_N$) preceding the one that contains the current jump.

7. The method as claimed in one of the preceding claims, **characterized in that** the magnitude of the voltage jump is predefined and between 12 V and 35 V, in particular equal to 20 V.

8. The method as claimed in one of the preceding claims, **characterized in that** the magnitude of the current jump is determined from the measured current signal.

9. The method as claimed in one of the preceding claims, **characterized in that** it comprises a step (E8) of comparing the determined energy of the electric arc with an energy threshold, and a protection step (E9) if said threshold is exceeded.

10. A device for evaluating the energy released by an electric arc in a photovoltaic installation (100), **characterized in that** it comprises:

• a module (80) for obtaining an electric current signal produced by the installation;
• a module (81) for processing the current signal, designed to determine an initial value of the current before an electric arc appears and current values during the electric arc;
• a module (82) for evaluating arc voltage values from the determined current values and from the initial value of the current;
• a module (83) for integrating, over time, the product of the evaluated arc voltage values and the determined current values, in order to determine the energy of the arc.

11. The device as claimed in the preceding claim, **characterized in that** the module (82) for evaluating arc voltage values is designed to calculate the difference between a determined current value during the arc and the initial current value and multiply said difference by the ratio between a magnitude of a voltage jump ($\Delta V_{arc0}$) linked to the appearance of the electric arc and a magnitude of a current jump ($\Delta I_{arc0}$) linked to the appearance of the electric arc.

12. The device as claimed in either of claims 10 and 11, **characterized in that** the module (81) for processing the current signal is designed to break down the current signal into a plurality of acquisition windows, and, for each acquisition window, determine an average value of the current measured over said window, said average value of the current being recorded in memory.

13. The device as claimed in the preceding claim, **characterized in that** the integration module (83) is designed to calculate, for each acquisition window, an arc energy by taking the product of the average value of the current measured over said window, of the evaluated voltage value and of a duration of the acquisition window, and then to sum (E7b) the calculated arc energies in relation to a succession of acquisition windows.

14. A safety system for a photovoltaic installation, **characterized in that** it comprises a device (7) for detecting an electric arc, a device (8) for evaluating the energy released by the detected electric arc, as claimed in one of claims 10 to 13, and an intervention device (9) intended to protect the photovoltaic installation in the event of an electric arc.

15. A photovoltaic installation, **characterized in that** it comprises a safety system as claimed in the preceding claim.

**Figure 1**

**Figure 2**

**Figure 3**

**Figure 4**

**Figure 5**

**Figure 6**

**Figure 7**

**RÉFÉRENCES CITÉES DANS LA DESCRIPTION**

**Documents brevets cités dans la description**

- FR 3002645

- FR 1561622

**Littérature non-brevet citée dans la description**

- **F. SCHIMPF ; L. NORMAN.** 31st International Telecommunication Energy conference. IEEE, 18 Octobre 2009

- **K. KOZYI et al.** IEEE Transactions on power delivery. IEEE service center, vol. 28, 1584-1591